# EUROPEAN PATENT APPLICATION

(11) **EP 2 953 115 A1**
(43) Date of publication of application: **09.12.2015**
(21) Application number: 15170847.6
(22) Date of filing: 05.06.2015
(51) Int. Cl.: G09B 19/00

(54) **SWING ANALYSIS SYSTEM**

(30) Priority: 06.06.2014 US 201414298338
(71) Applicant: Head Technology GmbH, 6921 Kennelbach (AT)
(72) Inventor: Schwenger, Ralf, 88171 Weiler im Allgäu (DE)
(74) Representative: Vossius & Partner Patentanwälte Rechtsanwälte mbB

(57) **Abstract**

A computer-implemented method of evaluating a movement in a sporting environment may include receiving a plurality of sets of data, each set of data including data of a movement in a sporting environment. The method may also include, for each of the sets of data, receiving an input evaluating the movement included in the given set of data. The input may define a rating associated with the given set of data. The method may also include receiving one or more features of the movement included in the sets of data, and identifying correlations among one or more features

## Description

The present disclosure is directed to a swing analysis system, more particularly, to a swing analysis system incorporating input.

Sports players, for example tennis players, golf players, or baseball players, both amateurs and professionals, continuously look to improve different aspects of their game. However, due to the complexity of a sports swing, sports players often have difficulty determining which portions of a swing should be changed and which portions should be repeated. Sports players looking to improve often enlist the help of video equipment and/or formal instruction. However, video analysis of a sports swing requires significant knowledge of proper swing mechanics to understand and diagnose faults. Further, formal instruction may be expensive and/or time-consuming to enable an instructor to diagnose the player's swing.

Both video analysis and formal instruction may also neglect the player's inherent physical limitations. One common benchmark used to improve sports swings of amateur players is to compare the swing of the amateur player to the swing of a professional player. However, analyzing swings in this manner does not account for the amateur player's limitations, skills, injuries, or other circumstances that may prevent the amateur player from repeating the swing of the professional player. Accordingly, there is a need for an analysis system to help sports players repeat rated good swings and behaviors.

In one aspect, the present disclosure is directed to a computer-implemented method of evaluating a movement in a sporting environment. The method may include receiving sensor data regarding player movement in a sporting environment, and receiving a contemporaneous rating evaluation of the movement from an individual associated with the movement. The method may also include displaying characteristics of the sensor data as a function of the rating evaluation.

Various aspects of the present disclosure may include one or more of the following examples: wherein the sensor data may be data from one or more of an image capture device, a swing sensor, a ball sensor, or an auxiliary sensor coupled to the player; receiving an indication of the type of player movement, and the displaying of the characteristics may also be a function of the type of player movement; wherein the individual associated with the movement may include one of the player or an individual observing the player movement; wherein the receiving of a rating evaluation may be received via voice signal; wherein the rating evaluation may be a value selected from a predetermined rating scale; wherein the sensor data may be received during a player competition; wherein a command to initiate the receiving of the sensor data or a terminate the receiving of sensor data may be received from the individual associated with the movement; wherein the displaying characteristics may include displaying one or more of portions of the sensor data or variables derived from the sensor data; wherein the displaying characteristics may include one or more of video images, swing data, ball data, player movement data; wherein the displaying may include displaying characteristics associated with one rating; wherein the displaying may include comparing characteristics associated with one rating with characteristics associated with a different rating; wherein the player movement may be a racket swing; and providing a training recommendation as a function of the swing data and the rating evaluation.

In another aspect, the present disclosure is directed to a computer-implemented method of evaluating a swing movement in a sporting environment. The method may include receiving a plurality of sets of sensor data associated with a plurality of swing movements in a sporting environment, and receiving a plurality of contemporaneous rating evaluations of the plurality of swing movements from an individual associated with the movement. The method may also include displaying characteristics of the plurality of sets of sensor data as a function of the plurality of rating evaluations.

Various examples of the present disclosure may include one or more of the following features: wherein the displaying may include comparing characteristics associated with one rating with characteristics associated with a different rating; wherein the sensor data may be data from one or more of an image capture device, a swing sensor, a ball sensor, or an auxiliary sensor coupled to the player; receiving an indication of the type of swing for each of the plurality of swing movements, and the displaying of the characteristics may also be a function of the type of swing; and wherein the displaying characteristics may include displaying one or more of portions of the sensor data or variables derived from the sensor data.

In yet another aspect, the present disclosure is directed to a computer-implemented method of evaluating a racket swing movement in a sporting environment, the method comprising: receiving sensor data regarding a plurality of racket swing movements of a player in a sporting environment; receiving a plurality of contemporaneous rating evaluations of the plurality of racket swing movements from an individual associated with the movement; and displaying characteristics of the sensor data as a function of the plurality of rating evaluations.

The present invention and, in particular, this aspect of the invention allows for linking the subjective impression of a player or coach with objective, measureable sensor data and for providing a feedback to the player or coach by displaying certain characteristics of the sensor data as a function of the plurality of rating evaluations, i.e. of the subjective impression of a player or coach. For example, a tennis player when performing a serve may very well have a "feeling" whether the serve is a good serve or a poor serve. However, without, e.g., a coach being present and providing professional feedback the player may not be in a position to decide why the serve was good or poor.

Yet, if the player, utilizing the present invention, performs a number of serves such as ten serves in row and evaluates each of these serves using, e.g., a predetermined rating scale (for example, ratings between 1 and 10 or "good"/"poor") the inventive method allows for correlating received sensor data (such as impact location of the ball on the racket, ball speed, or other swing data) with the received rating evaluations. On the basis of such a correlation certain characteristics of the sensor data are being displayed as a function of the plurality of rating evaluations. For example, the impact location for the "good" (or three best) serves may be displayed on a screen, possibly together with the ball speed or the like. Additionally or alternatively, a movie of the best swing may be shown on the display.

On the basis of the feedback provided by the inventive method a player may improve his playing abilities without the help of a professional coach by understanding the reasons for, e.g., a serve being good or poor.

The inventive method preferably comprises correlating the rating evaluations with the sensor data and identifying portions in the sensor data which are only present in racket swing movements rated with a negative evaluation and/or identifying portions in the sensor data which are only present in racket swing movements rated with a positive evaluation; wherein the displaying of the characteristics preferably comprises displaying the identified portions and/or marking the identified portions.

The inventive method preferably further comprises correlating the rating evaluations with the sensor data and establishing criteria which allow to automatically perform a rating evaluation on the basis on further sensor data. The inventive method preferably further comprises receiving sensor data regarding a further racket swing movement of a player in a sporting environment, automatically performing a rating evaluation on the basis of the sensor data and the established criteria, and displaying the rating evaluation. For example, under certain circumstances a tennis player may not know whether a certain type of swing is a good swing or a poor swing. Yet, while performing a series of similar swings a professional coach may evaluate those swings using, e.g., a predetermined rating scale (for example, ratings between 1 and 10 or "good"/poor"). The inventive method allows for correlating received sensor data (such as impact location of the ball on the racket, ball speed, or other swing data) with the received rating evaluations. On the basis of such a correlation certain criteria may be established which allow to automatically perform a rating evaluation on the basis on further sensor data. Thus, the player may receive a rating on the basis of further sensor data in the future without the help of said professional coach.

In yet another aspect, the present disclosure is directed to a computer readable storage medium including instructions that, when executed by a computer, may cause the computer to perform any of the above-mentioned method steps.

In yet another aspect, the present disclosure is directed to a computer readable storage medium including instructions that, when executed by a computer, may cause the computer to perform a plurality of functions. The functions may include receiving sensor data regarding player movement in a sporting environment, and receiving a contemporaneous rating evaluation of the movement from an individual associated with the movement. The functions may also include displaying characteristics of the sensor data as a function of the rating evaluation.

Various examples of the present disclosure may include the following feature: wherein the sensor data may be data from one or more of an image capture device, a swing sensor, a ball sensor, or an auxiliary sensor coupled to the player.

The present invention is further related to the following aspects:
1. A computer-implemented method of evaluating a movement in a sporting environment, the method comprising:
   receiving sensor data regarding player movement in a sporting environment;
   receiving a contemporaneous rating evaluation of the movement from an individual associated with the movement; and
   displaying characteristics of the sensor data as a function of the rating evaluation.
2. The method of aspect 1, wherein the sensor data is data from one or more of an image capture device, a swing sensor, a ball sensor, or an auxiliary sensor coupled to the player.
3. The method of aspect 1 or 2, further including receiving an indication of the type of player movement, wherein the displaying of the characteristics are also a function of the type of player movement.
4. The method of any of the preceding aspects, wherein the individual associated with the movement includes the player and/or an individual observing the player movement.
5. The method of any of the preceding aspects, wherein the receiving of a rating evaluation is received via acoustic signals, preferably voice signals.
6. The method of any of the preceding aspects, wherein the rating evaluation is a value selected from a predetermined rating scale.
7. The method of any of the preceding aspects, wherein the sensor data is received during a player competition.
8. The method of any of the preceding aspects, wherein a command to initiate the receiving of the sensor data or to terminate the receiving of sensor data is received from the individual associated with the movement.
9. The method of any of the preceding aspects, wherein the displaying characteristics includes displaying portions of the sensor data and/or variables derived from the sensor data.
10. The method of aspect 9, wherein the displaying characteristics includes displaying one or more of video images, swing data, ball data, player movement data.
11. The method of aspect 9 or 10, wherein the displaying characteristics includes displaying characteristics associated with one or more ratings.
12. The method of aspect 9, 10 or 11, wherein the displaying characteristics includes comparing characteristics associated with one rating with characteristics associated with a different rating.
13. The method of any of the preceding aspects, wherein the player movement is a racket swing.
14. The method of any of the preceding aspects, further including providing a training recommendation as a function of the swing data and the rating evaluation.
15. A computer-implemented method of evaluating a swing movement in a sporting environment, the method comprising:
   receiving a plurality of sets of sensor data associated with a plurality of swing movements in a sporting environment;
   receiving a plurality of contemporaneous rating evaluations of the plurality of swing movements from an individual associated with the movement;
   displaying characteristics of the plurality of sets of sensor data as a function of the plurality of rating evaluations.
16. The method of aspect 15, wherein the displaying includes comparing characteristics associated with one rating with characteristics associated with a different rating.
17. The method of any of aspects 15 to 16, wherein the sensor data is data from one or more of an image capture device, a swing sensor, a ball sensor, or an auxiliary sensor coupled to the player.
18. The method of any of aspects 15 to 17, further including receiving an indication of the type of swing for each of the plurality of swing movements, and the displaying of the characteristics are also a function of the type of swing.
19. The method of any of aspects 15 to 18, wherein the displaying characteristics includes displaying one or more of portions of the sensor data or variables derived from the sensor data.
20. A computer readable storage medium including instructions that, when executed by a computer, cause the computer to perform a plurality of functions, including functions to:
   receive sensor data regarding player movement in a sporting environment;
   receive a contemporaneous rating evaluation of the movement from an individual associated with the movement; and
   display characteristics of the sensor data as a function of the rating evaluation.
21. The computer readable storage medium of aspect 20, wherein the sensor data is data from one or more of an image capture device, a swing sensor, a ball sensor, or an auxiliary sensor coupled to the player.
Preferred embodiments of the present invention will be elucidated in further detail with reference to the following figures.
FIG. 1 is a schematic view of an exemplary swing analysis system;
FIG. 2 is a flow chart of an exemplary method performed by the swing analysis system of FIG. 1;
FIG. 3 is a flow chart of another exemplary method performed by the swing analysis system of FIG. 1; and
FIGS. 4 and 5 show exemplary screenshots of a mobile device from the swing analysis system of FIG. 1.
FIGS. 6 to 11 show exemplary sensor data which may be utilized and/or displayed in the context of the present invention.

Reference will now be made in detail to exemplary aspects of the present disclosure described above and illustrated in the accompanying drawings. Wherever possible, the same reference numbers will be used throughout the drawings to refer to the same or like parts.

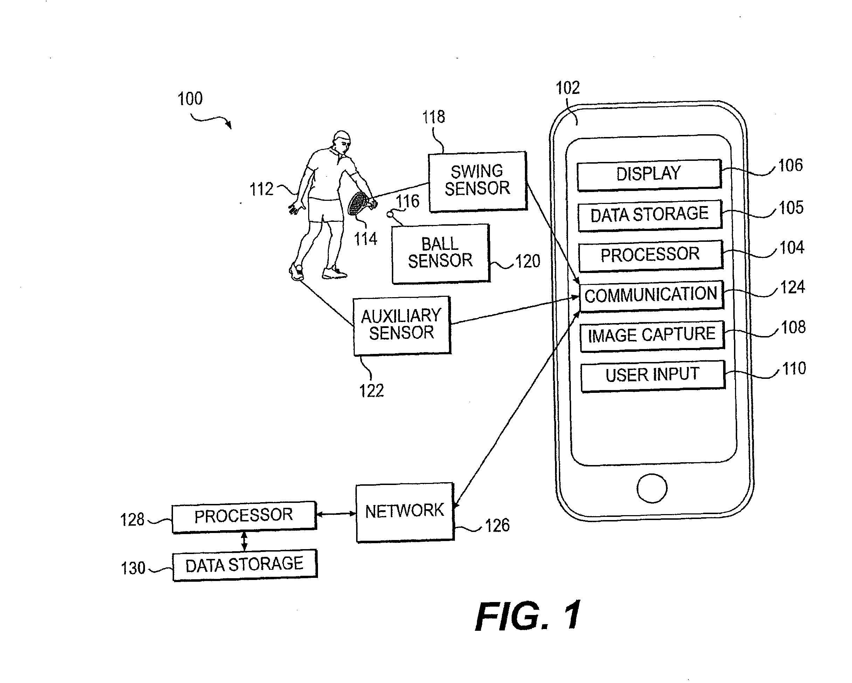

A swing analysis system 100 is depicted in FIG. 1. Swing analysis system 100 may include a mobile computing device 102 having a processor 104, a data storage device 105 coupled to processor 104, and a display 106. Mobile computing device 102 may also include an image capture device 108 and a user input device 110.

Mobile computing device 102 may be any suitable mobile computing device. In one aspect, mobile computing device 102 may be a cellular telephone (e.g., a smart phone). Mobile computing device 102 may also be another suitable mobile computing device, such as, e.g., a personal digital assistant ("PDA"), tablet computer or any other kind of touchscreen-enabled device, a personal computer, or a laptop. Mobile computing device 102 may have a web browser and/or mobile browser installed for receiving and displaying electronic content received from one or more web servers. Mobile computing device 102 may have an operating system configured to execute a web or mobile browser, and any type of application, such as a mobile application.

Mobile computing device 102 may be configured to receive image input from image capture device 108. In one aspect, image capture device 108 may be integral with mobile computing device 102. For example, image capture device 108 may be a camera or other image capture device integrated with a cellular telephone. Alternatively, image capture device 108 may be separate from mobile computing device 102. In some aspects, image capture device 108 may capture images and/or video of a player 112, a racket 114, and/or a game implement or ball 116.

Player 112 may be a sports player, e.g., a tennis player, a squash player, badminton player, a golf player, a baseball player, or another type of sport player. As referenced herein, the term "player" refers to an individual performing movements associated with a sporting activity, be it during actual sporting competition, or during practice or training activities, or solely for the purpose of data capture in accordance with this disclosure. The remainder of the disclosure will refer to the sports player as a tennis player, but it is understood that the disclosure will be equally applicable to other sports players and their associated accessories, such as a squash player with a squash racket and a squash ball, a badminton player with a badminton racket and a shuttlecock or birdie, a golf player with a golf club and a golf ball, a baseball player with a baseball bat and a baseball, or any other sports player and associated accessories.

Fig. 1 illustrates tennis player 112 having a tennis racket 114 and hitting a tennis ball 116. The movement(s) and/or location(s) of player 112, racket 114, and/or ball 116 may be captured by image capture device 108 and recorded (e.g., in a memory coupled to processor 104) by mobile computing device 102.

In addition, or as an alternative to receiving swing data from image capture device 108, mobile computing device 102 may receive swing data from a swing sensor 118, ball sensor 120, and/or an auxiliary sensor 122. All or portions of the data received from any or all of these devices/sensors (108, 118, 120, 122) is referred to as sensor data.

Swing sensor 118 may be any suitable sensor configured to collect racket data during the course of a swing. Swing sensor 118 may be operatively coupled to racket 114 in any suitable manner. For example, swing sensor 118 may be disposed within a frame or handle of racket 114, coupled to an exterior portion of the racket frame, or attached to the strings of racket 114, if desired. In some aspects, swing sensor 118 may be rigidly fixed to racket 114, or may be detachable from racket 114. Swing sensor 118 may be configured to sense parameters of a tennis swing such as, e.g., the impact force generated during ball contact, racket speed, ball speed, racket acceleration, pressure, pressure distribution, strain, impact force, stroke length, impact location, heart rate, calories burnt, foot position, string tension, contact time, racket life span, and/or any other values that can be calculated based on known data and collected data from swing sensor 118.

Ball sensor 120 may be configured to collect ball data during the course of play. Ball sensor 120 may be disposed within or otherwise coupled to game implement 116. Ball sensor 120 may be configured to sense parameters of play such as, e.g., lob height and air time during a serve, ball speed, ball trajectory, spin, or the like. Ball sensor 120 may communicate with mobile computing device 102 in a substantially similar manner that swing sensor 118 communicates with mobile computing device 102.

Auxiliary sensor 122 may be configured to track a location of player 112. In one aspect, auxiliary sensor 122 may be disposed in the shoes of player 112, a wrist-worn device, a glove, and/or disposed on various body parts of player 112 (e.g., elbow, wrist, hand, leg, back, chest, shoulder, or the like), and may be configured to track the location and/or speed of these body parts during all aspects of play. When in the shoes of player 112, auxiliary input device 122 may include GPS or another suitable technology to track the player's foot movement, since footwork may be vital to executing a proper swing technique. Auxiliary sensor 122 may also include at least one pressure sensor (not shown) to monitor pressure distribution in the shoes of player 112. Such sensors may be placed in the player's insoles. Auxiliary sensor 122 may communicate with mobile computing device 102 in a substantially similar manner that swing sensor 118 communicates with mobile computing device 102.

Swing sensor 118, ball sensor 120, and/or auxiliary sensor 122 may communicate data to a communication assembly 124 of mobile computing device 102 by any suitable mechanism, such as, e.g., BLUETOOTH, BTLE, Wi-Fi, IEEE 802.11, a parallel port, an Ethernet adapter, a FireWire (IEEE 1394) interface, a Universal Serial Bus (USB) and plug, and/or cables, wires, and other suitable wired or wireless connectors.

Mobile computing device 102 may also be configured to receive user input from user input device 110. In one aspect, user input device 110 may be integral with mobile computing device 102. For example, user input device 110 may be a microphone or other suitable audio capture device integrated with mobile computing device 102. Alternatively, user input device 110 may be separate from mobile computing device 102, such as a device held or worn by player 112, or an observer, including a device on the racket 114 itself. In one aspect, user input device 110 may include voice-recognition capability and receive voice commands from player 112 relating to a rating of a last-completed swing. In some aspects, user input device 110 may include another suitable mechanism, such as, e.g., a touchpad, touchscreen, or buttons, for player 112 to provide a rating of a last-completed swing to mobile computing device 102.

In some aspects, mobile computing device 102 may be configured to communicate and transmit data over a network 126 (e.g., a cellular, electronic, or internet network) via communication assembly 124. A processor 128 and a data storage device 130 may be coupled to network 126 and disposed remotely from mobile computing device 102. One or more of the functionalities of analysis system 100 may be carried out by processor 128 and data storage device 130.

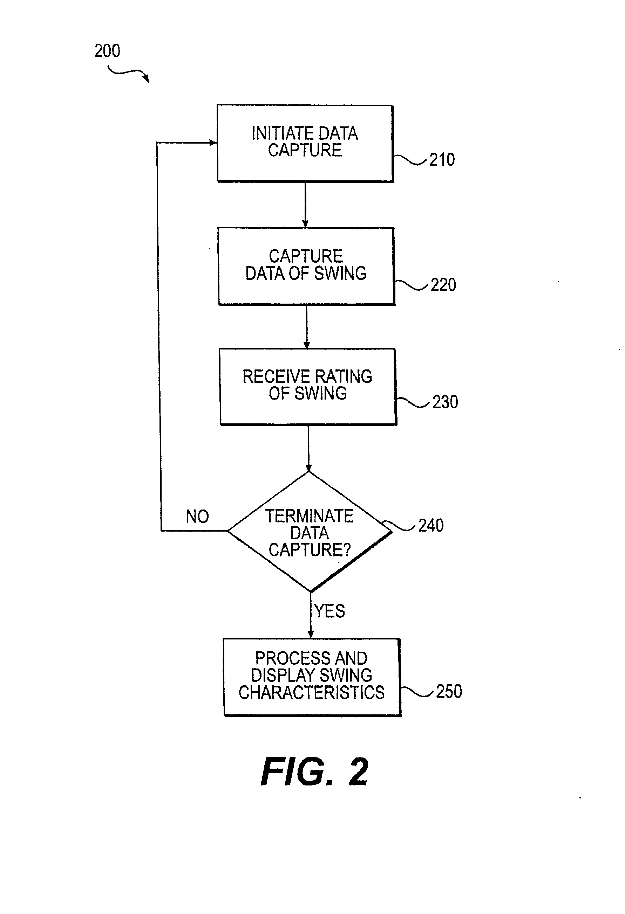

FIG. 2 is a flow diagram of a method 200 for analyzing a tennis swing. Method 200 may include the steps of initiating data capture (step 210), capturing swing data (step 220), receiving a rating of the swing (step 230), terminating data capture (step 240), and processing and displaying the captured data as a function of the received swing rating (step 250).

With respect to the initiating data capture of step 210, mobile computing device 102 may receive an indication that a swing is about to be performed by player 112. In some aspects, player 112, or an observer, may indicate that a swing is about to be performed by vocalizing a command, such as, e.g., SWING that is recognized by the mobile computing device 102. In another aspect, player 112, or an observer, may press a button or touchscreen of mobile computing device 102, or player 112, or an observer, may provide another suitable indication of initiation, such as, for example, via a device located on the racket 114, or located on the player's 112 body or an observer's body.

After initiating data capture in step 210, method 200 may proceed to step 220 where player 112 may perform a swing, e.g., a tennis swing, and the data associated with the swing is captured by the mobile computing device. The data capture may include one or more of: video data captured by image capture device 108, racket movement data captured by swing sensor 118 located on the racket 114, ball flight data captured by ball sensor 120 located on the ball 116, and/or player movement data captured by auxiliary sensor 122.

After the swing is complete, the player 112, or an observer, may communicate a rating evaluation of the last-completed swing to mobile computing device 102. Because this rating evaluation is based on sensed aspects by an individual (e.g. the player 112 or an observer), such a rating evaluation is considered subjective in nature. The rating may be communicated to mobile computing device 102 in any suitable manner, such as via voice commands from the player 112 or an observer, via inputs directly to the mobile computing device 102 through user input 110, via a separate rating device functionally connected to the mobile computing device 102, or via predetermined and unique movements of the racket, ball, and/or player 112 sensed by the various sensors of the analysis system 100. Once received, the mobile computing device 102 associates or links the ranking with the swing data previously captured.

Mobile computing device 102 may receive a rating along any suitable, predetermined rating scale such as, e.g., a numeric rating scale, a letter rating scale, or a word-associated rating scale. For example, player 112, or an observer, may assign a numerical rating (e.g., 1 - 3) to a last-completed swing, and communicate that rating to mobile computing device 102. In another aspect, player 112, or an observer, may assign a word-associated rating, e.g., EXCELLENT, GOOD, or POOR, to a last-completed swing. The rating of a last-completed swing may be communicated or input to mobile computing device 102 before the initiation of a next swing to ensure that a rating is correctly associated with the appropriate swing. In some aspects, mobile computing device 102 may not collect data on a next or subsequent swing attempt by player 112 until a rating on a recently-completed or last-completed swing is communicated to and recorded by mobile computing device 102. Alternatively, mobile computing device may be configured to allow a player 112, or an observer, to go back after a plurality of swings to rate, re-rate, or delete a particular swing. As understood herein, rating the swing before the initiation of a next swing, or after the completion of a plurality of swings as discussed above, are considered to be contemporaneous ratings.

To help ensure further accuracy of analysis system 100, mobile computing device 102 may request that the player confirm the rating, or otherwise indicate what rating was ultimately received by the mobile computing device 102. For example, mobile computing device 102 may request confirmation from player 112, or an observer, by providing a confirmation prompt. The confirmation prompt may be displayed on display 106, or the confirmation prompt may be an audio prompt that is output on an audio output device, e.g., a speaker, of mobile computing device 102. In some aspects, the player 112, or an observer, may be required to verify the rating assigned to the last-completed swing by, e.g., speaking a verbal command, pressing a button on mobile computing device 102, selecting an icon in the mobile application, or providing another suitable confirmation. In one aspect, the confirmation prompt may only request an indication from the player 112, or an observer, that the rating is incorrect, and may proceed after a set time period if no corrective indication is received. For example, a different sound, volume, and/or pitch may be played and associated with a unique rating. If player 112, or an observer, does not hear the correctly associated pitch, volume, and/or sound that is associated with the intended rating, a verbal or other suitable command may be given to cancel and/or correct the previous rating.

During the rating receiving step 230, player 112, or an observer, may additionally or alternatively indicate a type of swing that was performed, such as, e.g., SERVE, FOREHAND, BACKHAND, VOLLEY, LOB, SMASH, or another suitable swing. Identifying the swing type may assist in the data analysis by comparing and analyzing data from equivalent swing types, and identifying relevant analysis parameters for the particular swing type. Alternatively, the indication of swing type by the player 112 or observer can be done before or after the rating receiving step 230.

In some aspects, data capture (step 220) may capture swing data for a predetermined time period once data capture has been initiated (step 210). For example, sensor data may be captured for 10 seconds, 30 seconds, 1 minute, 5, minutes, 10 minutes, etc., from the initiation of data capture. It should be noted, however, that any other suitable time period may alternatively be utilized. Further, the time period could be variable, such as data capture during actual player competition. Alternatively or in addition, player 112 may provide an indication to mobile computing device 102 to terminate data capture. This indication can be provided in any similar manner as discussed above with respect to the initiation of data capture (step 210).

Alternatively or in addition, termination of data capture may be a function of the number of swing data sets captured. For example, swing analysis system 100 may require a minimum number of swing data sets to complete an analysis. For example, player 112 may be required to perform and rate a minimum number of swings or same type of swings, e.g., a minimum number of serves. In some aspects, a minimum number of completed swings assigned a given rating may be required, e.g., analysis system may require that the player perform at least 10 EXCELLENT-rated swings and at least 10 POOR-rated swings. If the threshold number of swing data sets has been met, or data capture has been otherwise terminated, method 200 may proceed to step 250.

At Step 250, processor 104 may process/analyze the captured data from the completed swings. The processing or analyzing may include all or a part of the captured data and can result in numerous different swing variables or characteristics representing aspects of the swing. The captured data and/or resulting analytics can be stored in a data storage of the mobile communication device 102, displayed, or sent to the remote network 126 for processing, or further processing, via the remote processor 128, and/or stored in remote data storage 130

Processor 104 may associate a unique identifier with each swing performed by player 112. Thus, each unique identifier may be associated with a set of data (representing a swing) collected at mobile computing device 102 via one or more of image capture device 108, swing sensor 118, ball sensor 120, and/or auxiliary sensor 122. Each unique identifier may also be associated with a user input that is representative of the rating assigned by player 112, or an observer, to the swing associated with the given unique identifier. Processor 104 may analyze each set of captured swing data to calculate, determine, identify, and/or extract one or more swing variables or characteristics from each set of captured data. These swing variables or characteristics may include, but are not limited to, swing speed, racket acceleration, swing trajectory, arm position, shoulder position, elbow position, wrist position, foot position, lower body position, upper body position, ball position, height of lob in a serve, amount of time a ball is airborne before being hit by the racket in a serve, among other features. In some aspects one or more swing variables may be extracted from images/video captured by image capture device 108 by any suitable video analysis software (e.g., Dartfish® or the like). In one example, video analysis of a swing may include the tracking and analysis of markers coupled to one or more of the player 112, racket 114, and ball 116.

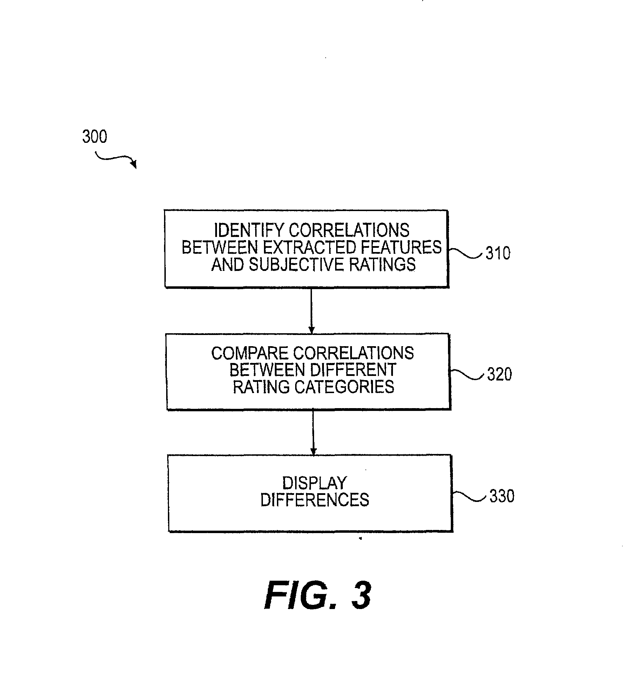

A method 300 for processing and displaying the captured data is shown in FIG. 3. Method 300 may begin at step 310, where processor 104 may process/analyze and correlate the swing variables calculated, identified, and/or extracted and stored in a database in order to display data showing areas of improvement for the player 112 and/or showing correlations between extracted features and the rating applied by the player 112 or an observer (i.e., ratings).

For example, processor 104 may identify correlations between swing variables determined from swings having the same rating (e.g., amongst all swings given a 3 or "EXCELLENT" rating by player 112 or an observer (step 310)). After identifying correlations between swing variables having the same rating, method 300 may proceed to step 320, where processor 104 may compare correlated swing variables belonging to a first performance rating to correlated swing variables belonging to a second performance rating to identify feature differences between swings having the first and second performance ratings.

For example, processor 104 may compare correlated swing features belonging to a first rating category, e.g., rating number 3, or EXCELLENT swings, to correlated extracted features belonging to a second rating category, e.g., rating number 2, or GOOD swings. In performing this comparison, processor 104 may determine swing variable variations or differences between differently-rated swings of player 112. For example, processor 104 may detect changes in swing speed, racket acceleration, swing trajectory, arm position, shoulder position, elbow position, wrist position, foot position, lower body position, upper body position, ball position, height of lob in a serve, amount of time a ball is airborne before being hit by the racket in a serve, among other features.

After processor 104 identifies swing variable differences between swings belonging to different rating categories, method 300 may proceed to step 330, where feedback may be provided to player 112 via, e.g., display 106 of mobile computing device 102.

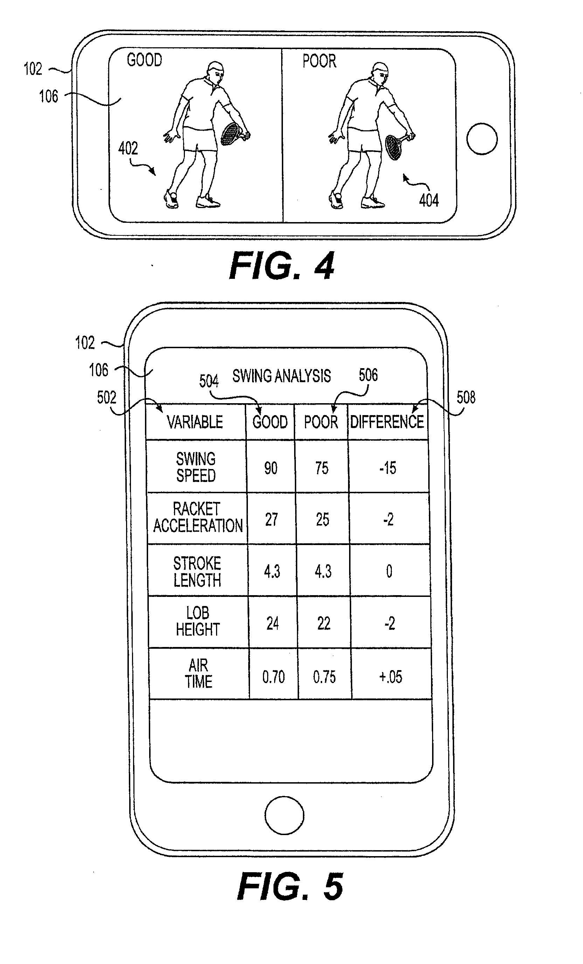

In one aspect, providing feedback to player 112 may include displaying a representation of one or more completed swings on display 106. FIG. 4 depicts an exemplary screenshot of mobile device 102. In the aspect shown by FIG. 4, representations of two swings performed by player 112 are shown side-by-side on display 106. A representation may be an image or video replay of player 112 performing the swing, or may be another suitable representation, such as, e.g., an animation. In one aspect, a first representation 402 may be representative of a first swing performed by player 112. First representation 402 may be a swing identified by processor 104 to be representative of swings belonging to a particular rating category (e.g., GOOD). A second representation 404 may be displayed simultaneously on display 106 with first representation 402. Second representation 404 may be a swing identified by processor 104 as representative of swings belong to a different rating category (e.g., POOR). By displaying the first representation 402 concurrent with the second representation 404 on display 106, player 112 may view feature differences between swings belonging to different swing rating categories identified by player 112. In some aspects, first and second representations may be manipulated and/or replayed according to a preference of player 112. For example, player 112 may choose to enlarge or minimize one or more of first and second representations 402, 404. In another example, player 112 may choose to alter the playback speed of first and second representations 402, 404, play first and second representation 402, 404 simultaneously, and/or alter any other suitable viewing parameter.

An indication may be displayed on one or more of first representation 402 and second representation 404. The indication may be any suitable indication that can be visualized on display 106, such as, e.g., an arrow, a marker, a highlight, vertical or horizontal lines, or other suitable indications. The indication may identify a feature difference of swings belonging to differently-rated swings, such as, e.g., the differently-rated swings shown by first and second representations 402, 404. For example, if processor 104 identifies arm position as a feature difference between swings of different rating categories, the indication may highlight arm position on first representation 402 and/or second representation 404. If multiple feature differences exist between swings belonging to different rating categories, a user may select to view multiple indications at the same time or one at a time. In some examples, a text, audio, or other indication may be provided in addition to a visual indication.

FIG. 5 depicts another exemplary screenshot of mobile device 102. In the aspect shown by FIG. 5, processor 104 may also output the swing variables correlated with a given rating category (e.g., correlated extracted features from GOOD-rated swings) chart form on display 106. It should be noted that the swing variables may be displayed in any other suitable form, such as, e.g., graphs, text, lines, or the like. Processor 104 may be configured to display the swing variables common to one or more different rating categories at the same time (e.g., displaying the correlated extracted swing variables from POOR swings simultaneous with the correlated extracted swing variables from GOOD swings). The display of information in this manner may allow player 112, a coach, or another interested party to identify swing variables common to swings of different rating categories.

In the exemplary aspect shown in FIG. 5, swing variables or parameters may be listed in a column 502. Values for the swing variables or parameters listed in column 502 associated with a first rating (e.g., associated with GOOD swings) may be displayed in a column 504. Similarly, values for the swing variables or parameters listed in column 502 that are associated with a second rating (e.g., associated with POOR swings) may be displayed in a column 506. In some exemplary aspects, the difference between the values associated with the first and second ratings may be displayed in a column 508. Columns 502 - 508 may relate to any suitable swing variables or parameter disclosed herein or related to a racket swing.

In one aspect, mobile computing device 102 may be configured to identify and display the swing variables differences identified between swings assigned a given rating, such as, e.g., the swing variable differences between an EXCELLENT swing and a GOOD swing. That is, mobile computing device 102 may be configured to display player tendencies that may cause a GOOD swing to be executed instead of an EXCELLENT swing. In another example, mobile computing device may rank swing variables having the greatest deviation between various ratings. For example, a first swing variable, e.g., racket speed may exhibit the greatest percentage change between EXCELLENT and GOOD swings, indicating that the first variable (e.g., racket speed) may be an important feature for player 112. On the contrary, a second swing variable (e.g., stroke length) may remain unchanged between EXCELLENT and GOOD swings, indicating to the player that the second swing variable (e.g., stroke length) is not an important swing variable to focus on.

In some aspects, mobile computing device 102 may display a percentage of each rating type assigned during a specific capture period (e.g., 50% EXCELLENT, 30% GOOD, 20% POOR). Mobile computing device 102 may track these percentages over multiple capture periods to allow player 112, or other party, to help identify rating trends over time.

In some aspects, analysis system 100 may track swings over multiple sessions. In one aspect, analysis system 100 may be configured to compare features to determine how player tendencies have changed over time. For example, after a first session, analysis system 100 may have determined a first feature difference (e.g., player 112 starts a movement of his right arm too quickly in BAD swings compared to EXCELLENT swings) between two different swing rating categories. Player 112, having knowledge of the first feature difference identified in a first training session, may correct the first feature difference via, e.g., practice sessions. At a subsequent training session utilizing analysis system 100, player 112 may have corrected the first feature difference and thus analysis system 100 may detect a different, second feature difference between two different swing rating categories of the second session. That is, because player 112 may have corrected the early movement of the right arm that was identified as the first feature difference between two different swing categories of the first session, the different, second feature difference may be identified between two different swing categories of the second session. Alternatively, if analysis system 100 continues to identify the first difference in the second or subsequent training session, player 112 may be reminded to continue to working to correct the first feature difference. In some aspects, analysis system 100 may be configured to identify a change in the magnitude of a feature difference over time. For example, analysis system 100 may indicate to player 112 that the first feature difference has been improved upon or worsened since the first training session.

In some aspects, processor 104 may be configured to make recommendations based on an analysis of completed swings. For example, processor 104 may be configured to suggest a training regimen to player 112 based on a the swing variables alone, or difference identified between different swing categories. In some aspects, processor 104 may be configured to suggest equipment recommendations (e.g., a lighter or heavier racket) or swing pattern recommendations (e.g., a non-standard string pattern configuration) based on one or more feature differences identified between different swing categories. In some aspects, player 112 may communicate equipment information and string pattern information to processor 104 via mobile computing device 102. Processor 104 may utilize the communicated equipment and/or string pattern information to make equipment and/or string pattern recommendations to player 112.

In some aspects, processor 104 may be configured to recommend that player 112 view one or more videos, demonstrations, lessons, or similar programming, based on an analysis of player 112. For example, if processor 104 determines that player 112 may improve swing performance by improving elbow positioning during swings, processor 104 may suggest that player 112 access a particular video, demonstration, lesson, or similar programming focused on proper elbow positioning. Such programming may include videos of actual tennis players or virtual representations of tennis players (e.g., avatars), and may be accompanied by audio instructions and discussion.

As noted above, in some aspects, a coach, instructor, or other suitable party may rate swings taken by player 112 to assist in an evaluation of player 112.

In some aspects, analysis system 100 may be configured to analyze a sequence of tennis events or swings. For example, swing mechanics, footwork, positioning, and other parameters of a serve and volley may be analyzed.

As noted above, the above described analysis system 100 may be configured to perform similar analysis based on ratings of players 112 in other physical activities or sports such as, e.g., golf swings, baseball swings, hockey shots or passes, throwing motions, kicking motions, basketball activities, or other suitable activities. When analyzing certain sport motions not utilizing an implement (e.g., throwing motions, basketball activities), analysis system 100 may rely on one or more sensors coupled to player 112 and/or on video analysis of data captured by image capture device 108.

When analyzing various swings, e.g., golf swings, in addition to rating swings according to a rating, a player 112 may utilize one or more additional or alternative rating systems. For example, player 112 may rate swings according to one or more of HOOK, STRAIGHT, and/or SLICE to help correct a recurring trajectory issue with a golf swing.

The analysis systems of the present disclosure may assist tennis players or other athletes in determining feature differences between differently-rated swing or sports movement categories. Thus, a tennis player 112 may quickly identify, without formal instruction, features of a tennis swing causing lapses in performance.

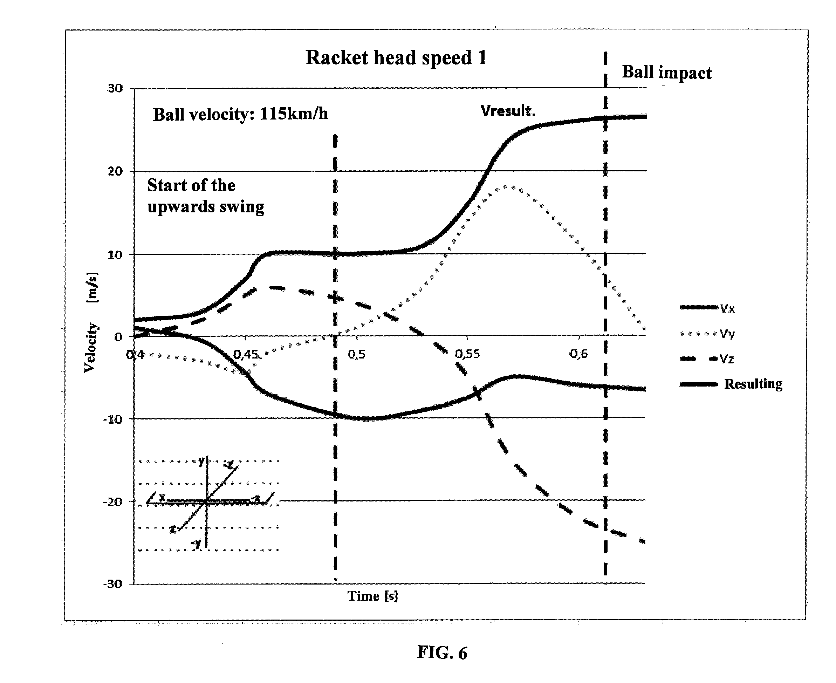

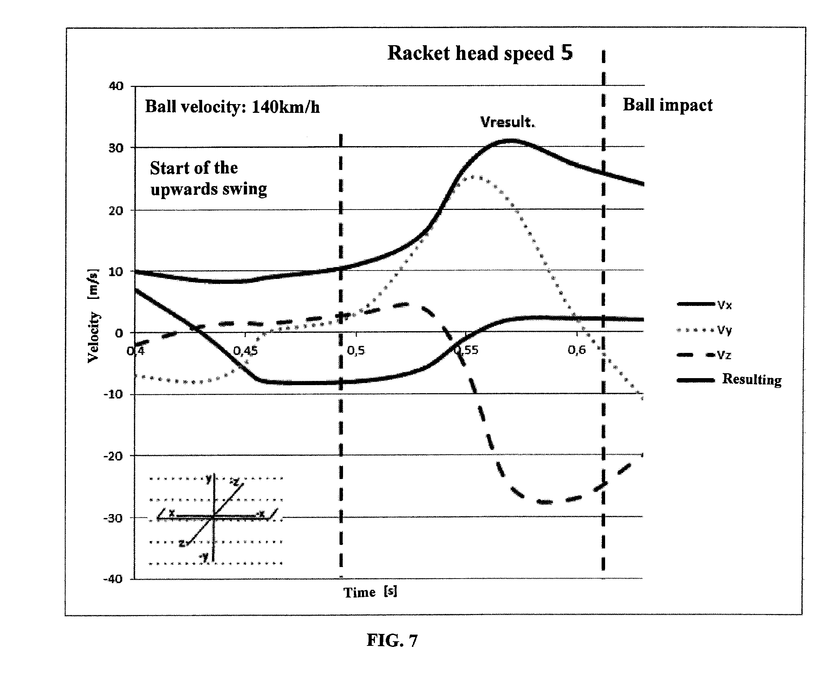

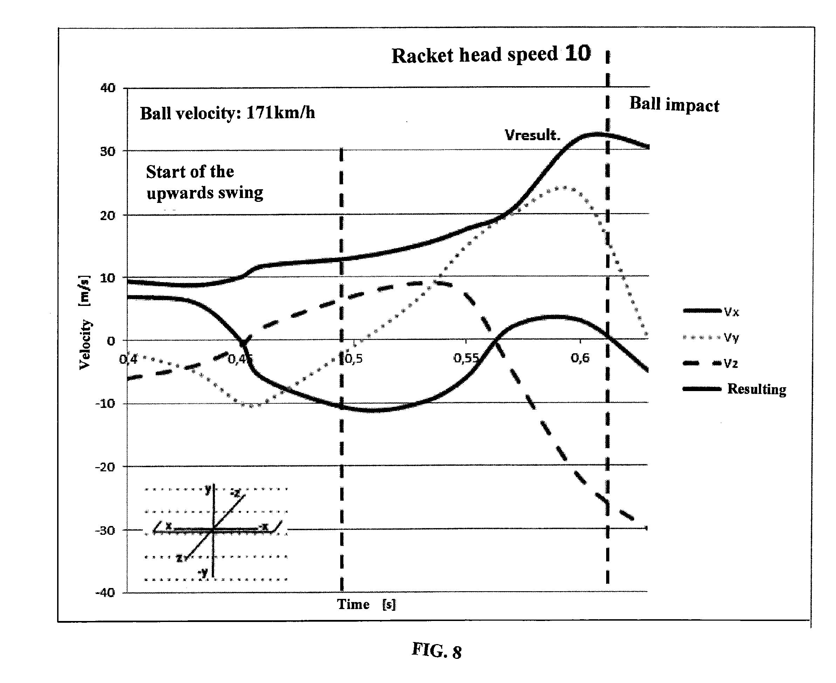

FIGS. 6 to 11 show exemplary sensor data which may be utilized and/or displayed in the context of the present invention. FIGS. 6 to 8 show three different graphs displaying racket head speed versus time during a swing of a tennis racket. The corresponding swings have been rated on a scale between 1 ("poor") and 10 ("excellent") as "1" (FIG. 6), "5" (FIG. 7) and "10" (FIG. 8). The measured ball velocities were 115 km/h, 140 km/h and 171 km/h, respectively. The graphs display the racket head speed along three different coordinates x, y and z as well as the resulting speed. Moreover, the start of the upwards swing as well as the time of the ball impact are marked as well. According to the inventive method the best and worst rated swings may be displayed on a display, i.e. FIGS. 8 and 6 in the present case. The player may then analyze these graphs and, e.g., recognize that ideally the maximum racket head speed should occur just before the ball impact (see FIG. 8).

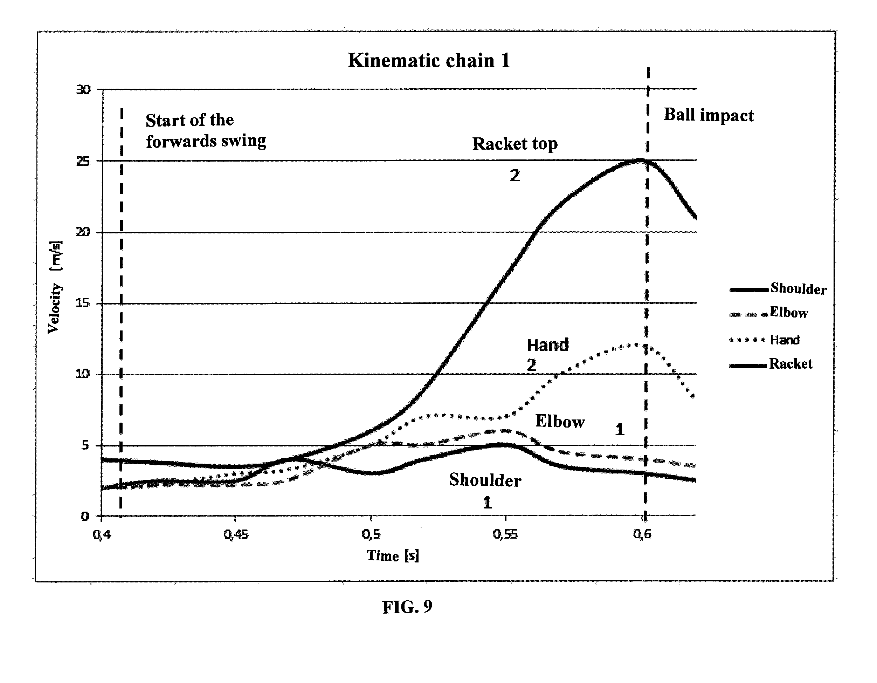

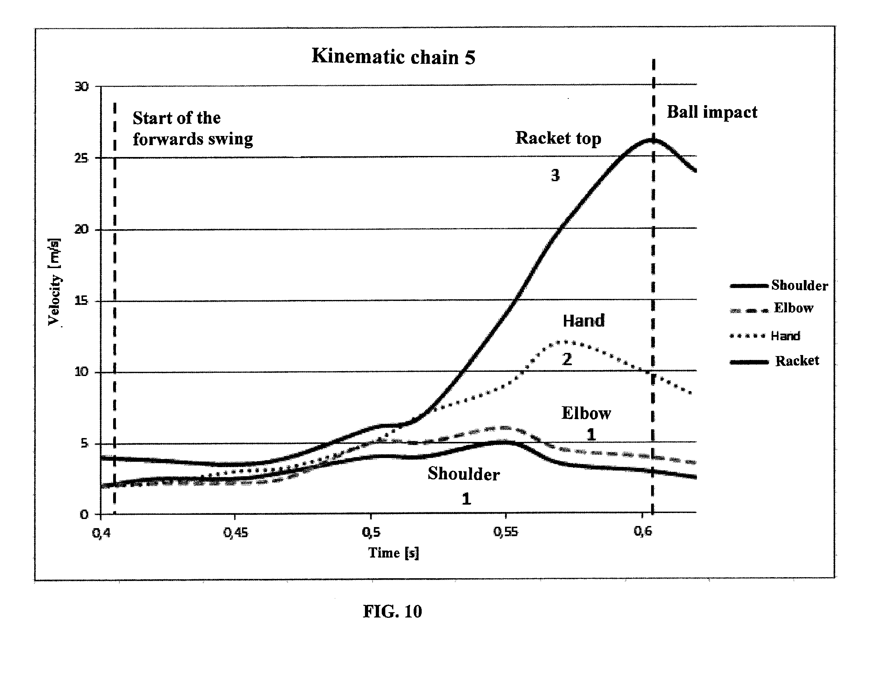

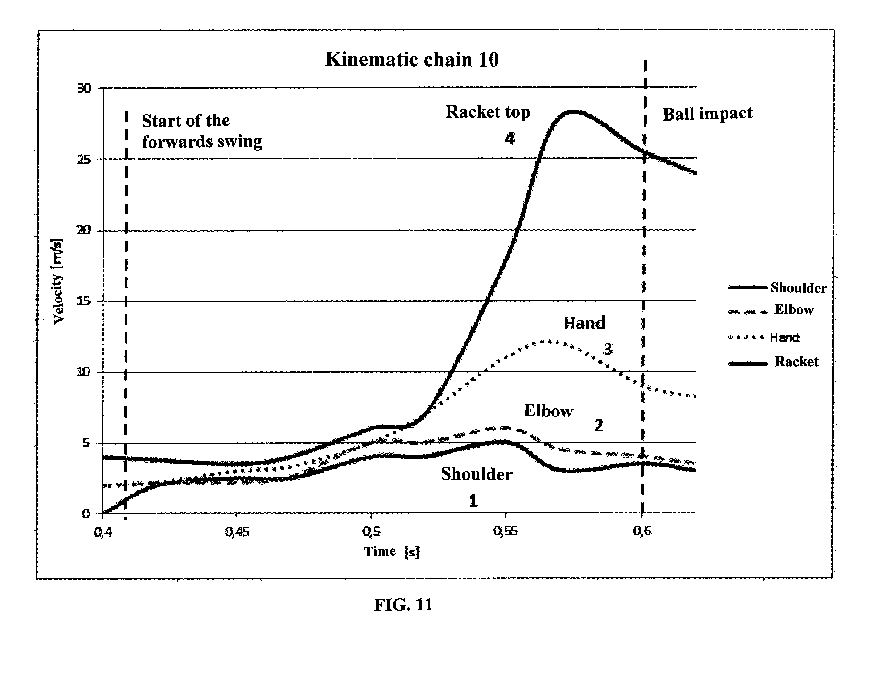

FIGS. 9 to 11 show three different graphs displaying the kinematic chain versus time during a swing of a tennis racket. The corresponding swings have been rated on a scale between 1 ("poor") and 10 ("excellent") as "1" (FIG. 9), "5" (FIG. 10) and "10" (FIG. 11). The graphs display the racket top speed together with the velocity of the shoulder, elbow and hand of the player as measured by sensors mounted to the player's body. Moreover, the start of the forwards swing as well as the time of the ball impact are marked as well. According to the inventive method the best and worst rated swings may be displayed on a display, i.e. FIGS. 11 and 9 in the present case. The player may then analyze these graphs and, e.g., recognize that ideally the maximum racket top speed should occur just after the maximum hand velocity (see FIG. 11) in order to benefit from a perfect kinematic chain.

Of course, the graphs shown in FIGS. 6 to 11 are to be understood as exemplary. Many different characteristics may be sensed and/or displayed in the context of the present invention.

While the present invention may be used in the context of any type of sport and, in particular, of any racket ball sport, certain advantages of the present invention are particularly pronounced in the context of tennis, badminton, squash and racquet ball. In these types of sport the variation of typical swings (in contrast to, e.g., golf) is quite extreme and due to the speed of it and the presence of an opponent it is particularly difficult for a player to analyze a swing during performance.

It will be apparent to those skilled in the art that various modifications and variations can be made in the disclosed analysis system without departing from the scope of the disclosure. Other aspects of the disclosure will be apparent to those skilled in the art from consideration of the specification and practice of the disclosure disclosed herein. It is intended that the specification and examples be considered as exemplary only. The following disclosure identifies some other exemplary aspects.

## Claims

1. A computer-implemented method of evaluating a racket swing movement in a sporting environment, the method comprising:
receiving sensor data regarding a plurality of racket swing movements of a player in a sporting environment;
receiving a plurality of contemporaneous rating evaluations of the plurality of racket swing movements from an individual associated with the movement; and
displaying characteristics of the sensor data as a function of the plurality of rating evaluations.

2. The method of claim 1, wherein the sensor data is data from one or more of an image capture device, a swing sensor, a ball sensor, or an auxiliary sensor coupled to the player.

3. The method of claim 1 or 2, further including receiving an indication of the type of racket swing for each of the plurality of racket swing movements, wherein the displaying of the characteristics are also a function of the type of racket swing.

4. The method of any of the preceding claims, wherein the individual associated with the movement includes the player and/or an individual observing the player movement.

5. The method of any of the preceding claims, wherein the receiving of a rating evaluation is received via acoustic signals, preferably voice signals.

6. The method of any of the preceding claims, wherein the rating evaluations comprise values selected from a predetermined rating scale.

7. The method of any of the preceding claims, wherein a command to initiate the receiving of the sensor data or to terminate the receiving of sensor data is received from the individual associated with the movement.

8. The method of any of the preceding claims, wherein the displaying characteristics includes displaying portions of the sensor data and/or variables derived from the sensor data.

9. The method of claim 8, wherein the displaying characteristics includes displaying one or more of video images, swing data, ball data, player movement data.

10. The method of claim 8 or 9, wherein the displaying characteristics includes displaying characteristics associated with one or more ratings.

11. The method of claim 8, 9 or 10, wherein the displaying characteristics includes comparing characteristics associated with one rating with characteristics associated with a different rating.

12. The method of any of the preceding claims, further including providing a training recommendation as a function of the swing data and the rating evaluations.

13. The method of any of the preceding claims, further comprising:
correlating the rating evaluations with the sensor data, and
identifying portions in the sensor data which are only present in racket swing movements rated with a negative evaluation and/or identifying portions in the sensor data which are only present in racket swing movements rated with a positive evaluation;
wherein the displaying of the characteristics preferably comprises displaying the identified portions and/or marking the identified portions.

14. The method of any of the preceding claims, further comprising correlating the rating evaluations with the sensor data and establishing criteria which allow to automatically perform a rating evaluation on the basis on further sensor data.

15. The method of claim 14, further comprising:
receiving sensor data regarding a further racket swing movement of a player in a sporting environment,
automatically performing a rating evaluation on the basis of the sensor data and the established criteria, and
displaying the rating evaluation.
